# EUROPÄISCHE PATENTSCHRIFT

(11) **EP 1 141 544 B1**
(45) Veröffentlichungstag und Bekanntmachung des Hinweises auf die Patenterteilung: **25.09.2002**
(21) Anmeldenummer: 99967880.8
(22) Anmeldetag: 10.12.1999
(51) Int. Cl.: F03D 11/00, F03D 9/00

(54) **VORRICHTUNG ZUR VERMEIDUNG DES EINDRINGENS VON KORROSIV WIRKENDEN SALZPARTIKELN BEI EINER OFFSHORE-WINDENERGIEANLAGE**
DEVICE FOR PREVENTING PENETRATION OF CORROSIVE SALT PARTICLES IN AN OFFSHORE WIND ENERGY FACILITY
DISPOSITIF DESTINE A EMPECHER LA PENETRATION DE PARTICULES DE SEL AYANT UNE ACTION CORROSIVE DANS UNE INSTALLATION DE PRODUCTION D'ENERGIE EOLIENNE SITUEE EN MER

(30) Priorität: 23.12.1998 DE 19859628
(43) Veröffentlichungstag der Anmeldung: 10.10.2001
(73) Patentinhaber: aerodyn Engineering GmbH, 24768 Rendsburg (DE)
(72) Erfinder: SIEGFRIEDSEN, Sönke, D-25840 Friedrichstadt (DE)
(74) Vertreter: Biehl, Christian, Dipl.-Phys.
(86) Internationale Anmeldenummer: DE9903944
(87) Internationale Veröffentlichungsnummer: WO00039459

(56) Entgegenhaltungen:
- EP-A- 0 811 764
- DE-A- 19 802 574
- HAU ERICH: "Windkraftanlagen" 1996 , SPRINGER VERLAG , BERLIN XP002138498 241430 Kapitel 15.7.1, erster Absatz, letzter Satz Seite 527

## Beschreibung

Die Erfindung betrifft eine Vorrichtung zur Vermeidung des Eindringens von korrosiv wirkenden Salzpartikeln in den Generator- und Getrieberaum einer Windenergieanlage, insbesondere einer Offshore-Windenergieanlage, wie zum Beispiel der in der EP 0 811 764 A1 der Anmelderin beschriebenen Windenergieanlage.

Für den Offshore-Einsatz konzipierte Windenergieanlagen besitzen einen weitestgehend gekapselten Generator- und Getrieberaum, der aufgrund der nur mit hohem Aufwand möglichen Wartung das Ausfall- und Wartungsrisiko weitestmöglichst minimiert ist.

Ein besonderes Problem beim Offshore-Einsatz ist die naturgegeben dort vorhandene salzhaltige Luft, die in geringen Mengen auch an Dichtungen vorbei in den Innenraum eindringen kann. Dort bildet sie auf lange Sicht salzhaltige und damit hygroskopische Schmierfilme, die aufgrund ihrer elektrisch leitenden Eigenschaften in der Steuer- und Überwachungstechnik Kurzschlüsse verursachen können, sowie Korrosionsprobleme verursachen.

Der Erfindung liegt die Aufgabe zugrunde, die Bildung dieser korrosiv wirkenden Filme dadurch zu verhindern, daß die Salzpartikel am Eindringen gehindert werden.

Erfindungsgemäß wird dies durch eine Vorrichtung mit den Merkmalen des Hauptanspruchs gelöst. Die Unteransprüche geben vorteilhafte Ausführungsformen wieder.

Statt nun eine immer aufwendigere Abdichtung vorzusehen, die jedenfalls dann, wenn sie geöffnet werden muß, auch der Umgebungsluft zugänglich ist, wird vorgeschlagen, zunächst durch einen luftdruckerzeugenden, Luft unter Überdruck in einen im wesentlichen gekapselten Generator- und Getrieberaum einzubringen. Vorzugsweise wird hierzu ein Luftdruckerzeuger und eine Filtereinrichtung zur Abscheidung von Feuchtigkeit und Salzpartikeln vorgesehen, so daß während des Betriebs kontinuierlich trockenere, salzpartikellose Luft einbracht wird, die die Bildung der Schmierfilme verhindert, und gleichzeitig durch den geschaffenen Überdruck das unbeabsichtigte Eindringen von Außenluft durch kleine Spalte mit einem Gegenstrom unterbindet.

Diese Filtereinrichtung kann eine Wirbelkammer sein, der ein Luftdruckkompressor vorgeschaltet ist, wobei in der Wirbelkammer die Luft in einer schnellen Kreisbahn geführt wird und zentrisch gegen die Fliehkraft den Wirbelabscheider verlassen muß. Wasser- oder Salzpartikel jedoch werden sich am äußeren Rande durch die Zentrifugalkraft absetzen und können dann abgeleitet werden.

Eine alternative Ausführungsform könnte bei einem auf der Rückseite der Windkraftanlage angeordneten Lufteinlaß lange den Turm der Windkraftanlage in der Länge nutzende Absetzschläuche mit einer am Boden vorgesehenen Auffangeinrichtung, die Luft in einen Überdruckbereich im Generator- und Getrieberaum fördern.

Weiter wird vorgeschlagen, einen Drucksensor vorzusehen, der es möglich macht, über eine Fernüberwachung die notwendige Luftdruckerzeugung zu überwachen. Steigt beispielsweise die notwendige Leistung eines Kompressors an oder kann der Kompressor trotz voller Leistung nicht den Druck halten, läßt dies Rückschlüsse auf den Zustand des Kompressors oder der Dichtigkeit der Generator- und Getriebekapselung zu.

Weiter könnte bei hohen Außenluftgeschwindigkeiten eine Erhöhung des Druckes in dem Generator- und Getrieberaum sinnvoll sein. Etwaige sonst durch höheren Außendruck eindringende Salzpartikel werden nun durch die durch den auch im Inneren herrschenden höheren Druck ausdringende getrocknete Luft daran gehindert, Schmierfilme im Innenraum zu bilden.

Gegebenenfalls könnten weitere hohle Bestandteile der Windkraftanlage ebenfalls derartig unter Druck gesetzt werden.

Eine ohne elektrische Versorgung arbeitende Vorrichtung mit z.B. einer strömungsbedingt einen Staudruck aufbauend angeordneten Lufteintrittsöffnung und/oder einer Absaugunterdruck aufbauend angeordneten Luftaustrittsöffnung würde sehr betriebssicher ohne großen zusätzlichen Aufwand realisierbar sein.

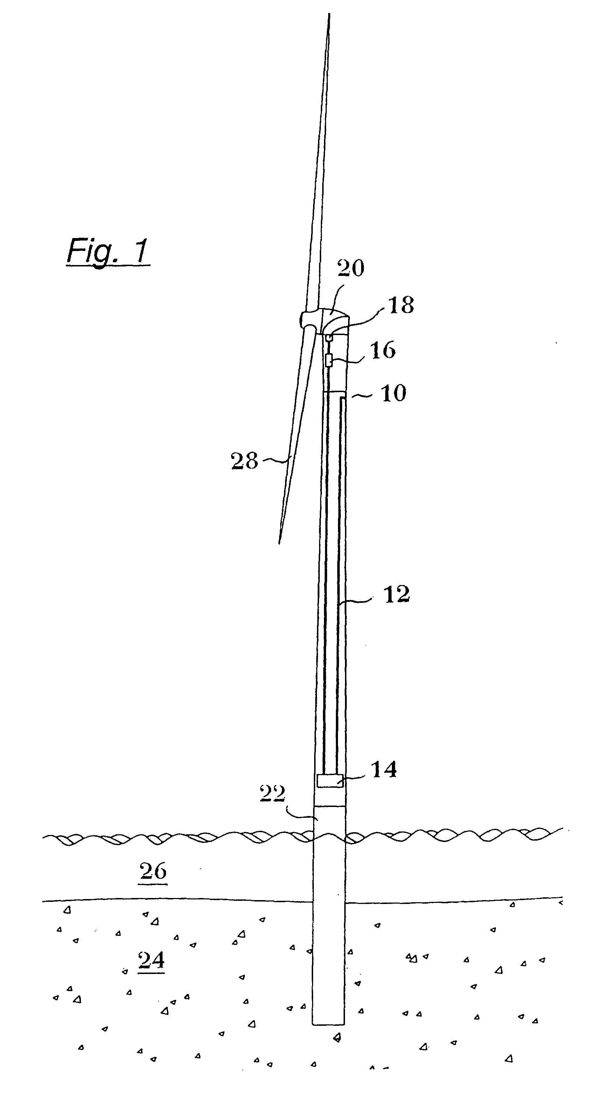

Weitere Vorteile der Erfindung ergeben sich aus nachfolgender Beschreibung eines bevorzugten Ausführungsbeispiels anhand der beigefügten Zeichnung. Dabei zeigt die einzige
- Fig. 1: eine schematische Windkraftanlage in seitlicher Ansicht mit geschnitten dargestelltem Turm.

Die in der Fig. 1 im Turm einer Offshore-Windanlage angeordnete Vorrichtung zur Vermeidung des Eindringens von korrosiv wirkenden Salzpartikeln in den Generator- und Getrieberaum einer Windkraftanlage besteht im wesentlichen aus einem, wie in der Fig. 1 angedeutet, auf der windabgewandten Seite, im höheren Turmbereich, d. h. im Bereich der Generator- und Getriebeanordnung vorgesehenen Lufteinlaß 10, an den sich im Turminneren angeordnete Absetzschläuche 12 anschließen, die vorteilhafterweise in einer Absetzwanne 14 im unteren Bereich enden. Diese Absetzwanne ist zur einfachen Ausförderung etwaig eingedrungenen Wassers vorteilhafterweise oberhalb der Wasseroberfläche angeordnet.

Ein unterer Turmabschnitt 22 ruht im Meeresgrund 24 und ragt durch die Wasserschicht 26 hindurch. Von der Absetzwanne nach oben sind wenigstens ein weiterer Absetzschlauch vorgesehen, der trockene Luft vorteilhafterweise durch eine weitere Filtereinrichtung 16 und einen Kompressor 18 in einen Überdruckbereich, nämlich im wesentlichen in den Generator- und Getrieberaum 20 einführt.

Durch die langen Vertikalstrecken werden Partikel sich vorteilhafterweise in der Absetzwanne 14 sammeln und nur sehr leichte Partikel kommen überhaupt in die Filtereinrichtung 16.

Es ist auch möglich, auf den Kompressor 18 zu verzichten, wenn durch strömungsbedingt einen Staudruck aufbauend angeordnete Lufteintrittsöffnungen 10 und/oder einen Absaugunterdruck aufbauend angeordnete Luftaustrittsöffnungen eine Einbringdruckdifferenz erzeugt wird, die Luft in den Generator- und Getrieberaum 20 einbringt.

Damit dort ein Überdruck herrscht, wäre es denkbar, eine Mantelung auch unter Unterdruck zu setzen. Dieser Überdruck wird bewirken, daß durch Durchführungen und dergleichen keine Salzpartikel und keine Feuchtigkeit in den Getriebe-Generatorraum 20 eindringen können, die dort, insbesondere wenn sie sich auf Zahnrädern und dergleichen absetzen, Krusten bilden würden und zu einem vorzeitigen Verschleiß und zu insbesondere kurzen Wartungsintervalen führen würden.

## Patentansprüche

1. Vorrichtung zur Vermeidung des Eindringens von korrosiv wirkenden Salzpartikeln in den Generator- und Getrieberaum einer Windenergieanlage,
**gekennzeichnet durch**
- einen Luft unter Überdruck in wenigstens einen im wesentlichen geschlossen ausgeführten Teil des Generator- und Getrieberaums (20) einbringenden Luftdruckerzeuger und
- eine dem Generator- und Getrieberaum (20) in Strömungsrichtung vorgeschaltete Filtereinrichtung (16) zur Abscheidung von Feuchtigkeit und Salzpartikeln aus der vom Luftdruckerzeuger in den Raum einzubringende Luft.

2. Vorrichtung nach Anspruch 1, **dadurch gekennzeichnet, daß** der Luftdruckerzeuger ein Kompressor (18) ist, dem eine Filtereinrichtung (16) vorgeschaltet ist.

3. Vorrichtung nach einem der vorangehenden Ansprüche, **dadurch gekennzeichnet, daß** der Lufteinlaß (10) auf der windabgewandten Seite im Bereich des Generator- und Getrieberaums (20) angeordnet ist.

4. Vorrichtung nach einem der vorangehenden Ansprüche, **dadurch gekennzeichnet, daß** die Filtereinrichtung (16) eine Wirbelkammer ist.

5. Vorrichtung nach einem der Ansprüche 1 bis 3, **dadurch gekennzeichnet, daß** die Filtereinrichtung (16) als eine Absetzeinrichtung mit langen, im wesentlichen vertikal im Turminneren angeordneten Absetzschläuchen (12) ausgebildet ist.

6. Vorrichtung nach einem der vorangehenden Ansprüche, **gekennzeichnet durch** einen den Luftdruck im Generatorund Getrieberaum (20) überwachenden, die Leistung des Luftdruckerzeugers regelnden Luftdrucksensor.

7. Vorrichtung nach wenigstens einem der vorangehenden Ansprüche, **gekennzeichnet durch** wenigstens eine strömungsbedingt einen Staudruck aufbauend angeordnete Lufteintrittsöffnung zur Erzeugung einer Einbringdruckdifferenz.

8. Vorrichtung nach Anspruch 7, **gekennzeichnet durch** eine strömungsbedingt einen Absaugunterdruck aufbauend angeordnete Luftaustrittsöffnung.

## Claims

1. Device for preventing the penetration of corrosively acting salt particles into the generator and gear area of a wind power plant, **characterized by** an air pressure generator introducing air under overpressure into at least one substantially closed part of the generator and gear area (20) and a filter device (16) upstream of the generator and gear area (20) in the flow direction for separating moisture and salt particles from the air to be introduced into the area by the air pressure generator.

2. Device according to claim 1, **characterized in that** the air pressure generator is a compressor (18) upstream of which is connected a filter device (16).

3. Device according to one of the preceding claims, **characterized in that** the air intake (10) is located on the leeward side in the vicinity of the generator and gear area (20).

4. Device according to one of the preceding claims, **characterized in that** the filter device (16) is a vortex chamber.

5. Device according to one of the claims 1 to 3, **characterized in that** the filter device (16) is constructed as a depositing device with long depositing tubes (12) arranged substantially vertically in the tower interior.

6. Device according to one of the preceding claims, **characterized by** an air pressure sensor regulating the air pressure generator power and monitoring the air pressure in the generator and gear area (20).

7. Device according to at least one of the preceding claims, **characterized by** at least one in flow-dependent manner air intake opening building up a dynamic pressure for producing an introduction pressure difference.

8. Device according to claim 7, **characterized by** a flow-dependent air exit opening producing a suction vacuum.

## Revendications

1. Dispositif pour éviter la pénétration de particules de sel à action corrosive dans la chambre du générateur et de la transmission d'une éolienne,
**caractérisé par** :
- un dispositif de création d'une surpression d'air qui introduit de l'air en surpression dans au moins une partie de configuration essentiellement fermée, de la chambre du générateur et de la transmission (20), et
- un dispositif de filtration (16) situé, dans le sens de l'écoulement, en amont de la chambre du générateur et de la transmission (20), pour séparer l'humidité et les particules de sel de l'air que le dispositif de création d'une surpression d'air doit introduire dans la chambre.

2. Dispositif selon la revendication 1, **caractérisé en ce que** le dispositif de création d'une surpression d'air est un compresseur (18) en amont duquel est raccordé un dispositif de filtration (16).

3. Dispositif selon l'une des revendications précédentes, **caractérisé en ce que** l'admission d'air (10) est disposée du côté sous le vent, dans la région de la chambre du générateur et de la transmission (20).

4. Dispositif selon l'une des revendications précédentes, **caractérisé en ce que** le dispositif de filtration (16) est une chambre à tourbillons.

5. Dispositif selon l'une des revendications 1 à 3, **caractérisé en ce que** le dispositif de filtration (16) est configuré comme dispositif de dépôt présentant de longs manchons de dépôt souples disposés essentiellement à la verticale à l'intérieur de la tour.

6. Dispositif selon l'une des revendications précédentes, **caractérisé par** un capteur de pression d'air qui surveille la pression de l'air dans la chambre du générateur et de la transmission (20), et qui régule la puissance du dispositif de création d'une surpression d'air.

7. Dispositif selon au moins l'une des revendications précédentes, **caractérisé par** une ouverture d'entrée d'air disposée de manière à permettre à l'écoulement d'établir une pression d'accumulation, pour créer une différence de pression d'apport.

8. Dispositif selon la revendication 7, **caractérisé par** une ouverture de sortie d'air disposée de manière à permettre à l'écoulement d'établir une dépression d'aspiration.
